# EUROPEAN PATENT APPLICATION

(11) **EP 2 143 557 A1**
(43) Date of publication of application: **13.01.2010**
(21) Application number: 08405171.3
(22) Date of filing: 07.07.2008
(51) Int. Cl.: B32B 7/06, B65D 77/20

(54) **Packaging film for manufacturing reclosable packaging**

(71) Applicant: Alcan Technology & Management Ltd., 8212 Neuhausen am Rheinfall (CH)
(72) Inventor: Jammet, Jean-Claude, 8212 Neuhausen (CH)

(57) **Abstract**

A multilayer packaging film for manufacturing packaging has a layer (14) of soft sticky adhesive, a cover layer (12) arranged on the one side of the soft sticky adhesive layer (14), a sealing layer (18) arranged on the other side of the soft sticky adhesive layer (14), and a barrier layer (16) arranged on the side pointing to the sealing layer (18)- The packaging film made up of the individual layers (12, 14, 16, 18) consists of one single coextrusion film (10A, 10B).

## Description

The invention relates to a multilayer packaging film for manufacturing reclosable packaging, with a layer of pressure sensitive adhesive, a cover layer arranged on the one side of the pressure sensitive adhesive layer, a sealing layer arranged on the other side of the pressure sensitive adhesive layer, and a barrier layer arranged between the pressure sensitive adhesive layer and the sealing layer for preventing passage of odours and substances causing smells originating from the pressure sensitive adhesive layer.

A reclosable lid consisting of a multilayer packaging film sealable to the rim of a container is disclosed in EP 1 138 610 B1. The packaging film comprises from the outside to the inside a support layer, a pressure sensitive adhesive layer, a barrier layer for preventing passage of gases and migration of odours and substances causing smells originating from the pressure sensitive adhesive into the container and the filling contained in the container, respectively, and a sealable layer for closing the container by sealing the packaging film to the container. The sealable layer is a multilayer film containing the said barrier layer besides a proper sealing layer as well as a connecting layer in contact with the pressure sensitive adhesive layer. The sealing layer with the integrated barrier layer is manufactured by coextrusion. The layer of pressure sensitive adhesive, e.g. a hotmelt adhesive, is applied to the support layer by extrusion and simultaneously connected to the coextruded sealing layer with integrated barrier layer thereby forming the lid film.

DE 10 2005 044 969 B3 discloses a multilayer packaging film comprising from the outside to the inside a cover layer, a pressure sensitive adhesive layer, a barrier layer against migration of substances causing smells originating from the pressure sensitive adhesive into the container and the product packed in the container, respectively, and a sealable layer for closing the container by sealing the packaging film to the container. The packaging film consists of two coextrusion films glued together, a first coextrusion film featuring the sealable layer, the migration barrier layer and a skin layer, and the second coextrusion layer featuring the pressure sensitive adhesive layer, the cover layer and an other skin layer covering the pressure sensitive adhesive layer. The two coextrusion films are glued together at the two skin films.

EP 1 053 952 B1 discloses a reclosable packaging consisting of a container and a lid sealed to this container. The container comprises a support layer and a three-part layer with a permanent adhesive layer. The permanent adhesive layer is arranged between two layers, the one layer serving the adhesion with the support layer and the other layer serving as sealable connecting layer to the lid. The three-part layer with the integrated permanent adhesive layer is made as a coextrusion film and thereafter glued together with the support layer.

A considerable disadvantage of the afore-mentioned solutions is the manufacturing complexity.

The object of the invention is to provide a multilayer packaging film of the kind mentioned that is easier, more convenient, more cost favourable to manufacture in comparison to prior art packaging films. The concept of a film integrating functionalities of sealing, barrier, cover layer, reclosability, offers high versatility for manufacturing easily and efficiently all kind of film association to fulfil final packaging requirements.

That objective is achieved by way of the invention in that the packaging film made up of the individual layers consists of one single coextrusion film.

The coextrusion film can be manufactured as cast or blown film. The coextrusion film can be mono- or bi-oriented, i.e. stretched inline or offline in one or two steps. Orientation enhances barrier and mechanical properties and improves film flatness and printability.

Mono- or bi-axially stretched coextrusion films can be produced via blown film extrusion by forming two or three bubbles. The process is called "double bubble (2B)" and "triple bubble (3B)" process, respectively. The blown film extrusion with three bubbles, i.e. the "triple bubble process", as explained in the following, is herein also named "3B process" and films produced with the 3B process are called "3B films". In the 3B process, a polymer mass is extruded through a ringshaped nozzle or circular extrusion die forming a thick tube in the form of a monolayer or multilayer film, calibrated to an exact diameter after leaving the nozzle and thereafter quenched. Subsequently, the tube is heated to a selected stretching temperature and in a further step inflated with air or another suitable gas between two pairs of nip rolls to enlarge the diameter of the bubble, thereby forming a second bubble and being stretched in transverse direction (TD). The stretching in longitudinal or machine direction (MD) is carried out by adjusting a different rotation speed of the nip rolls, thereby limiting the length of the bubble in its longitudinal direction. The tube expanded to a bubble is in this way transported with a higher speed compared to the extrusion speed so that its orientation is maintained in transverse and machine direction, respectively. The stretching process, applied on the film during the first two bubble steps, introduces some mechanical stress in the film. Consequence is the tendency of the film to shrink back, close to its initial dimension, as soon as heated to temperatures similar to the temperatures applied during the stretching process in the second bubble. To control the mechanical tension introduced in the film by the biaxial orientation and the following rapid quench, the film is expanded to a third bubble and fixed in the inflated state, thereby maintaining a controlled temperature and a controlled inner pressure of the bubble. This heat treatment of the third bubble contributes to the flatness especially of multilayer films, thereby maintaining high stability and good mechanical strength obtained by biaxial orientation. An additional advantage of the third bubble process is to control the film residual mechanical stress and, consequently, the shrinking properties of the final package if heated afterward.

An additional barrier layer for preventing passage of gases and water vapour may be arranged between the pressure sensitive adhesive layer and the cover layer.

An intermediate layer consisting of a tie layer may be arranged between adjacent layers.

A sealing layer having barrier properties may be used instead of a barrier layer separately arranged to the sealing layer.

The cover layer preferably consists of a homopolymer or copolymer of polyolefins, preferably polyethylene (PE), polypropylene (PP) or a PE or PP blend, homopolymers or copolymers of polyamide (PA), homopolymers or copolymers of polyesters.

The pressure sensitive adhesive layer preferably consists of a hotmelt pressure sensitive adhesive (Hotmelt-PSA), i.e. a pressure sensitive, hot melting adhesive.

In the following, the term "pressure sensitive adhesive" (PSA) means a permanent adhesive which can adhere to a surface just by applying pressure, and the term "hotmelt pressure sensitive adhesive" (Hotmelt-PSA) means a pressure sensitive adhesive, free of solvent, which is heated and melted during processing and before being applied onto a surface or onto another layer in a coextrusion process. Typical compositions of such adhesives consist of a mixture of 40-90% of a block polymer, or mixtures of block polymers, on the basis of a polymer from the group of SIS (styrene/isoprene/styrene), SBS (styrene/butadiene/styrene), SEBS (styrene-ethylene-butadiene-styrene) and SIBS (styrene-isoprene-butadiene-styrene, unmodified or maleic acid modified, di-block or tri-block copolymers, APAO (atactic poly-alpha-olefins), ethylene vinyl acetate copolymer (EVA), or ethylene acrylate copolymers (EA). To obtain the required tackiness at the service temperature, these compositions contain a tackifying resin from the following groups
- natural and synthetic resins, e.g. colophanes and derivatives, in particular esters of resins and or hydrated alternatives thereof,
- polyterpenes and terpene phenols or derivatives thereof,
- hydrocarbon resins, hydrocarbon modified resins and fully or partially hydrogenated hydrocarbon resins,
- as an option vegetal wax or oil, hydrated short chain polymers or waxes from aliphatic and/or aromatic oligomers or mixtures thereof.

The barrier layer preferably consists of ethyl vinyl alcohol (EVOH), polyvinyl alcohol (PVOH), polystyrene (PS), polymethylmethacrylate (PMMA), polycarbonate (PC), polyacrylonitrile (PAN), polyacrylonitrile / methacrylate copolymer (PAN-MA) or polyamide (PA), preferably aromatic PA, PA6, PA6.6, PA12 or PA11, cyclo-olefin polymers and copolymers (COC, COP), fluorinated and chlorinated polymers and copolymers (PVDF, PVDC), ester type polymers, PET, PETg, biodegradable polymers of the family of esters, lactic acid polymers (PLA) or polyglycolic acid.

Glycol-modified polyethyleneterephthalate (PETG), polyethyleneterephthalate (PET), biodegradable polyesters such as the aliphatic aromatic copolyester ECOFLEX^{®} from BASF, polylactic acid (PLA), cyclo-olefin copolymer (COC) or cyclo-olefin polymers (COP), may be used as a sealing layer material having barrier properties.

The barrier layer or the sealing layer having barrier properties may also consist of a polymer alloy, preferably an alloy PP/PA, PE/PA, PP/ EVOH, PE/EVOH, PE/PMMA, PP/PMMA, PE/COC, PP/COC, PE/COP, PP/COP, EVA/PETG, EMA/PETG, EBA/PETG, PE/PET, PP/PET, PE/PS or PP/PS.

A polymer alloy is a blend of incompatible polymers with complementary properties, e.g. barrier and sealing properties. The blend should show synergetic effects and enough cohesion not to be a simple dispersion of a product within the other. Usually, in order to achieve good cohesion and good dispersion, a ternary compound is added to play the role of a surface active agent or the role of a binder of the two polymer phases.

Polymer containing nanoparticles, e.g. nanoclays or other filling materials improving barrier properties, e.g. talc, calcium carbonate, silicates, silica and synthetic silica, zeolithe and phyllosilicates, may also be used as suitable materials for the barrier layer or the sealing layer having barrier properties.

The sealing layer preferably consists of a polyolefin, preferably polyethylene (PE), polypropylene (PP) or derivatives or copolymers thereof, or mixtures of the aforementioned materials.

The cover layer may be printed and/or overlacquered with a cover lacquer.

The multilayer packaging film is oriented using mono orientation technology, or one step or two steps, in line or off line, bi-orientation technology. The bi-orientation technology is preferably a triple bubble coextrusion process.

The cover layer of the multilayer packaging film according to the invention may be connected to at least one other film consisting of a metal foil, preferably an aluminium foil, paper, plastic films or a combination of the aforementioned materials.

In general, the packaging film according to the invention may be used to manufacture lid films for containers with reclosable lid. On the other hand the packaging film can also be part of the container and the laminate, respectively, from which the containers are manufactured by thermoforming. Moreover, the packaging film according to the invention may be used for all kind of pouch packages, such as stand-up pouches and flow packs.

The field of application of the packaging film according to the invention encompasses amongst others the domains food and non-food, pharmaceutics, cosmetics as well as industrial applications.

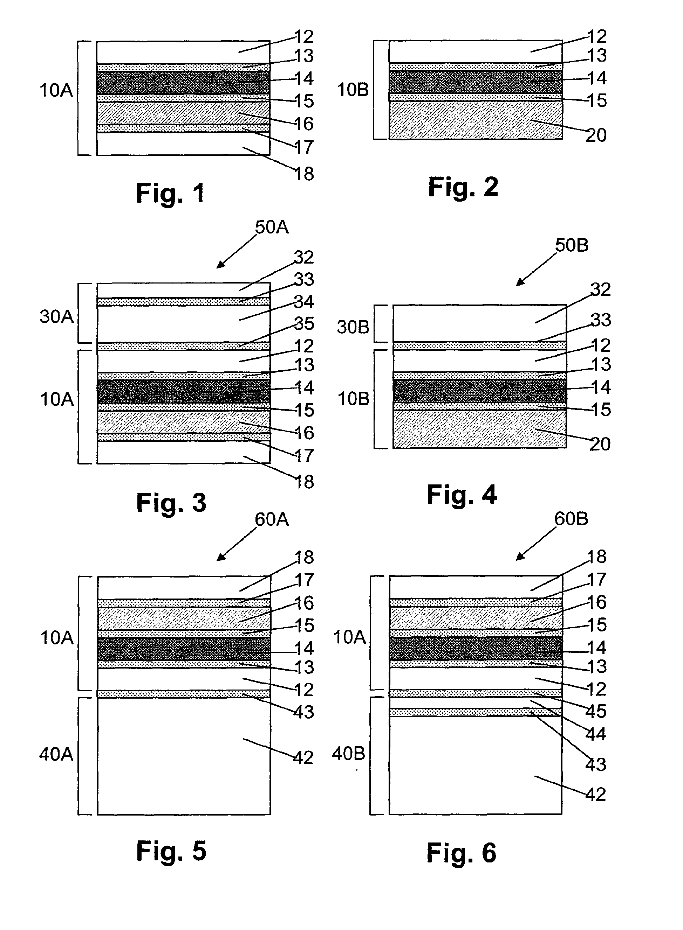

Further advantages, features and details of the invention are revealed in the following description of preferred exemplary embodiments and with the aid of the drawing which shows schematically in
- Fig. 1: a cross-section of a first packaging film;
- Fig. 1 a: the packaging film of Fig. 1 with a second barrier layer;
- Fig. 2: a cross-section of a second packaging film;
- Fig. 3: a cross-section of a first lid film;
- Fig. 3a: the lid film of Fig. 3 combined with the film of Fig. 1 a;
- Fig. 4: a cross-section of a second lid film;
- Fig. 5: a cross-section of a first container laminate;
- Fig. 6: a cross-section of a second container laminate;
- Fig. 7: chromatogram of reference Sample 1.

Fig. 1 shows a packaging film 10A manufactured in one single process step by coextrusion having the following layer composition. The figures in micrometers (µm) relate to the thickness of the corresponding layer in the coextruded film.
- 12: cover layer, 5 to 50 µm, e.g. PE
- 13: tie layer, 1 to 30 µm
- 14: pressure sensitive adhesive layer, 1 to 40 µm, e.g. hotmelt
- 15: tie layer, 1 to 30 µm
- 16: barrier layer, 0.001 to 30 µm, e.g. EVOH or COC
- 17: tie layer, 1 to 30 µm
- 18: sealing layer, 5 to 50 µm, e.g. PE

The packaging film 10A' shown in Fig. 1 a corresponds to the film 10A shown in Fig. 1 with an additional barrier layer 16' between cover layer 12 and pressure sensitive adhesive layer 14. Film 10A' is manufactured in one single process step by coextrusion as a 9-layer film having the following layer composition.
- 12: cover layer, 5 to 50 µm, e.g. PE
- 13: tie layer, 1 to 30 µm
- 16': barrier layer, 0.001 to 30 µm, e.g. EVOH or COC
- 13': tie layer, 1 to 30 µm
- 14: pressure sensitive adhesive layer, 1 to 40 µm, e.g. hotmelt
- 15: tie layer, 1 to 30 µm
- 16: barrier layer, 0.001 to 30 µm, e.g. EVOH or COC
- 17: tie layer, 1 to 30 µm
- 18: sealing layer, 5 to 50 µm, e.g. PE

A second packaging film 10B shown in Fig. 2 differs from the film shown in Fig. 1 in that a sealing layer having barrier properties 20 is used instead of a barrier layer 16 separately arranged to the sealing layer 18. Thus, the second packaging film 10B has the following layer composition.
- 12: cover layer, 5 to 50 µm, e.g. PE
- 13: tie layer, 1 to 30 µm
- 14: pressure sensitive adhesive layer, 1 to 40 µm, e.g. hotmelt
- 15: tie layer, 1 to 30 µm
- 20: sealing layer having barrier properties, 0.001 to 60 µm, e.g. PETG or polymer alloy

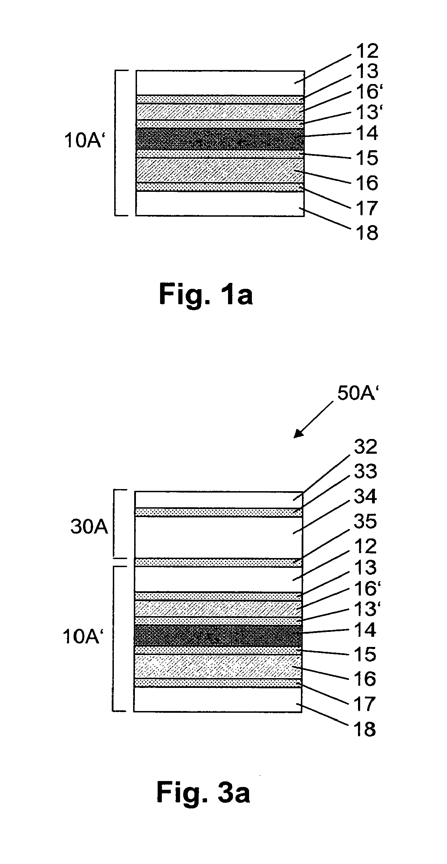

A first lid film 50A shown in Fig. 3 suitable to be sealed to the rim of a container has a support layer 30A consisting of a first printed oPET film 32 having a thickness of 12 µm and forming later the outer side of the lid of a packaging and a second oPET-Film 34 connected to the first oPET film 32 via an adhesive layer 33 of a polyurethane (PUR) or acrylate adhesive. The film 32 may also be an oPA from 12 to 25 µm or a plain or coex oPP from 18 to 50 µm. This support layer 30A is connected to the cover layer 12 of the first packaging film manufactured by coextrusion 10A via a further adhesive layer 35 of a polyurethane (PUR) adhesive or an extrusion tie layer, thereby forming the lid or pouch film 50A.

The lid film 50A' shown in Fig. 3a corresponds to the lid film 50A shown in Fig. 3 having the support layer 30A consisting of a first printed oPET film 32 having a thickness of 12 µm and forming later the outer side of the lid of a packaging and a second oPET-Film 34 connected to the first oPET film 32 via an adhesive layer 33 of a polyurethane (PUR) or acrylate adhesive. The film 32 may also be an oPA from 12 to 25 µm or a plain or coex oPP from 18 to 50 µm. This support layer 30A is connected to the cover layer 12 of the packaging film shown in Fig. 1 a manufactured by coextrusion 10A' via a further adhesive layer 35 of a polyurethane (PUR) or acrylate adhesive or an extrusion tie layer, thereby forming the lid or pouch film 50A '.

A second lid film 50B shown in Fig. 4 has a support layer 30B consisting of one single oPET film 32 having a thickness of 12-50 µm or an oPA of 12-25 µm or a plain or coextruded oPP of 18-50 µm. This support layer 30B is connected to the cover layer 12 of the second packaging film manufactured by coextrusion 10B via an adhesive layer 33 of a polyurethane (PUR) or acrylate adhesive or an extrusion tie layer, thereby forming the lid or pouch film 50B.

The composition of a first container laminate 60A shown in Fig. 5 suitable for the manufacturing of thermoformable containers has a support layer 40A consisting of a PET, PP, PVC or PS film or sheet 42. This support layer 40A is connected to the cover layer 12 of the first packaging film manufactured by coextrusion 10A via an adhesive layer 43 consisting of a polyurethane (PUR) or acrylate adhesive or an extrusion tie layer, thereby forming the container laminate 60A.

A second container laminate 60B shown in Fig. 6 has a support layer 40B consisting of a PET, PP, PVC or PS film or sheet 42 and a EVOH or PA film 44 connected to the PET film 42 via an adhesive layer 43 consisting of a polyurethane (PUR) or acrylate adhesive. This support layer 40B is connected to the cover layer 12 of the second packaging film manufactured by coextrusion 10B via a further adhesive layer 45 consisting of a polyurethane (PUR) or acrylate adhesive or an extrusion tie layer, thereby forming the container laminate 60B.

Peel tests and barrier property tests as described below have been carried out with selected biaxially oriented packaging films.

### Peel Tests

The peel resistance has been determined with the test method according to DIN 53282 measuring the force Fᵢₙᵢₜ necessary for initiating and Fₚᵣₒₚ necessary for propagating peeling in machine direction (MD) and in cross direction (CD) at a sealing temperature of 170 °C and a seal time of 1 s. The film test stripes had a seal width of 15 mm, the speed of the tensile testing machine was 50 mm/min. The following materials have been tested:

| | |
|---|---|
| Sample 1 | PE/tie/PE-Peel/tie/PE/PE/PE |
| Sample 2 | PE/tie/PE-Peel/tie/PE/COC/PE |
| Sample 3 | PE/tie/PE-Peel/tie/EVOH/tie/PE |

Sample 1 is the reference, without barrier material and barrier layer. Samples 2 and 3 contain cyclo-olefin copolymer (COC) and ethylene vinyl alcohol copolymer (EVOH), respectively, as a barrier layer.

The PE-peel layer was designed to have the same mechanical behaviour as the hotmelt pressure sensitive adhesive during the peel test.

The results are compiled in table 1.

**Table 1: Peel Tests**

| Sample No. | Peel resistance (seal seam strength) | | | |
|---|---|---|---|---|
| | Machine Direction (MD) | | Cross Direction (CD) | |
| | Fᵢₙᵢₜ [N/15 mm] | Fₚᵣₒₚ [N/15 mm] | Fᵢₙᵢₜ [N/15 mm] | Fₚᵣₒₚ [N/15 mm] |
| 1 | 10.5 | 5.6 | 9.5 | 5.3 |
| 2 | 11.1 | 5.9 | 11.0 | 5.3 |
| 3 | 12.9 | 6.2 | 11.4 | 5.5 |

The mechanical forces show a good behaviour of both barrier layers in comparison with a pure PE layer. The COC and EVOH barrier layer do not affect the global behaviour of the film and permit to be close to the film without barrier which is the reference for peel resistance.

### Barrier Tests

The three same materials and barrier films have been tested regarding barrier properties for volatile substances emitted by a typical film sample without barrier layer. The film structure of the typical film without any barrier is:
PE/tie/hotmelt pressure sensitive adhesive/tie/PE. 10 ×10 cm of the typical film sample without barrier and containing the hotmelt pressure sensitive adhesive layer have been sealed into 17 × 4 cm bags made of the three films containing barrier materials to be tested. The following materials have been tested:

| | |
|---|---|
| Sample 1 (reference) | PE/tie/hot melt pressure sensitive adhesive/tie/PE |
| Sample 2 | PE/tie/PE/tie/PE/PE/PE |
| Sample 3 | PE/tie/PE/tie/PE/COC/PE |
| Sample 4 | PE/tie/PE/tie/EVOH/tie/PE |

The sealed bags were filled into 20 mL headspace vials. Headspace GC/MS analysis was carried out on the bags using SPME (Solid Phase Microextraction with CAR/PDMS/DVB). The samples were extracted at 50 °C for 20 minutes and desorbed at 240 °C in the GC injector (splitless). The mass spectrometer was operated in scan mode (m/z 40-460). The GC parameters were 40 °C; 4 min/10°C min⁻¹/150 °C; 0 min/20°C min⁻¹/280 °C; 25 min. GC-Column: ZB-5 30 m × 0.25 mm × 0.25 µm. Helium was used as mobile phase at a flow rate of 1.8 mL min⁻¹.

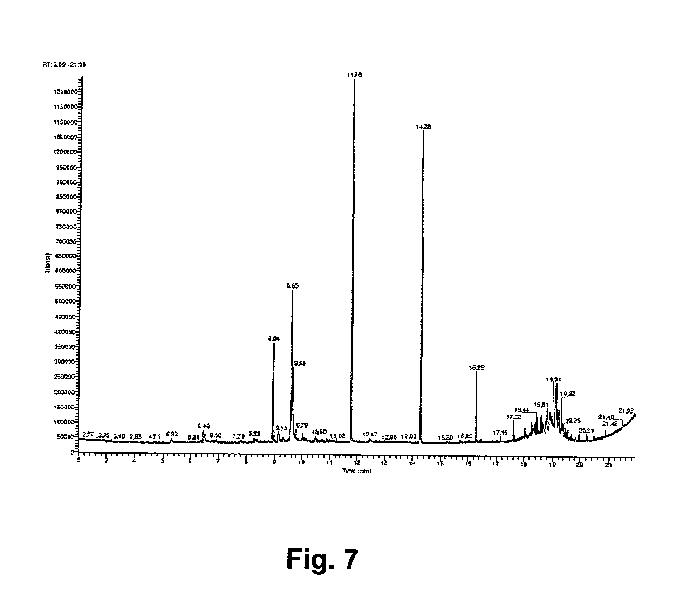

With reference to the chromatogram of reference Sample1 shown in Fig. 7 the following substances have been found in the reference film according to Sample 1:
9.60 and 9.65 min: terpenes
11.78, 14.28, 16.28 and 17.62 min: silicone (blind value from SPME device)
ca. 18 - 20 min: a group of substances related to each other, terpenes

Results for bag Samples 2, 3 and 4 filled with the reference film according to Sample 1 are as follows:

The group of "terpenes" detected in the reference film according to Sample 1 with retention times between 18 and 20 min was not detected in any of the other samples. Obviously under the conditions chosen for these experiments terpenes do not migrate through any of the bags in detectable amounts.

The group of "terpenes" detected in the reference film according to Sample 1 between 9.60 and 9.65 min have been detected in Sample 2. Under the conditions chosen for these experiments this group of substances was not detected in Samples 3 and 4.

These analytical results show that COC (cyclo-olefin copolymer) and EVOH reduce the goblal migration of compounds through the sealing layer, in this case PE (polyethlene).

In addition to preventing passage of odours from the pressure sensitive adhesive layer into the food, the barrier layer arranged between the pressure sensitive adhesive layer and the sealing layer may also be a barrier against volatizing of aromas of packed food, i.e. aromas of the food may be preserved and kept fresh as long as possible with best organoleptic properties.

### List of reference numerals

- 10A, 10A', 10B: packaging film
- 12: cover layer
- 13, 13': tie layer
- 14: pressure sensitive adhesive layer
- 15: tie layer
- 16, 16': barrier layer
- 17: tie layer
- 18: sealing layer
- 20: sealing layer with barrier properties
- 30A, 30B: support layer
- 32: oPET, oPA, oPP plain or coex Film, printed
- 33: PUR or acrylate adhesive layer
- 34: oPET, oPA, oPP plain or coex Film
- 35: PUR or acrylate adhesive layer
- 40A, 40B: support layer
- 42: PET, PP, PS, PVC film or sheet
- 43: PUR or acrylate adhesive layer or extrusion tie layer
- 44: EVOH, PA film
- 45: PUR or acrylate adhesive layer
- 50A, 50A', 50B: lid or pouch laminate
- 60A, 60B: container laminate

## Claims

1. Multilayer packaging film for manufacturing reclosable packaging, with a layer (14) of pressure sensitive adhesive, a cover layer (12) arranged on the one side of the pressure sensitive adhesive layer (14), a sealing layer (18) arranged on the other side of the pressure sensitive adhesive layer (14), and a barrier layer (16) arranged between the pressure sensitive adhesive layer (14) and the sealing layer (18) for preventing passage of odours and substances causing smells originating from the pressure sensitive adhesive layer (14),
**characterised in that**
the packaging film made up of the individual layers (12, 14, 16, 18) consists of one single coextrusion film (10A, 10B).

2. Multilayer packaging film according to claim 1, **characterised in that** the coextrusion film (10a, 10b) is a mono- or bi-oriented cast or blown film.

3. Multilayer packaging film according to claim 1 or 2, **characterised in that** an additional barrier layer (16') for preventing passage of gases and water vapour is arranged between the pressure sensitive adhesive layer (14) and the cover layer (12).

4. Multilayer packaging film according to one of claims 1 to 3, **characterised in that** an intermediate layer (13, 13' 15, 17) consisting of a tie layer is arranged between adjacent layers (12, 14, 16, 16', 18).

5. Multilayer packaging film according to one of claims 1 to 4, **characterised in that** a sealing layer (20) having barrier properties is used instead of a barrier layer (16) separately arranged to the sealing layer (18).

6. Multilayer packaging film according to one of claims 1 to 5, **characterised in that** the cover layer (12) consists of a homopolymer or copolymer of polyolefins, preferably polyethylene (PE), polypropylene (PP) or a PE/PP blend, homopolymers or copolymers of polyamide, homopolymers or copolymers of polyesters.

7. Multilayer packaging film according to one of claims 1 to 5, **characterised in that** the pressure sensitive adhesive layer (14) consists of a hotmelt pressure sensitive adhesive.

8. Multilayer packaging film according to one of claims 1 to 7, **characterised in that** the barrier layer (16) consists of ethylene vinyl alcohol (EVOH), polyvinyl alcohol (PVOH), polystyrene (PS), polymethylmethacrylate (PMMA), polycarbonate (PC), polyacrylonitrile (PAN), polyacrylonitrile /methacrylate copolymer (PAN-MA), polyamide (PA), preferably aromatic PA, PA6, PA6.6, PA12 or PA11, cyclo-olefin polymers and copolymers (COC, COP), fluorenated and chlorinated polymers and copolymers (PVDF, PVDC), ester type polymers, PET, PETg, biodegradable polymers of the family of esters, lactic acid polymers (PLA) or polyglycolic acid.

9. Multilayer packaging film according to one of claims 1 to 7, **characterised in that** the sealing layer (20) having barrier properties consists of glycol-modified polyethyleneterephthalate (PETG), polyethyleneterephthalate (PET), biodegradable polyesters, polylactic acid (PLA) or cyclo-olefin copolymer or polymer (COC, COP).

10. Multilayer packaging film according to one of claims 1 to 7, **characterised in that** the barrier layer (16) or the sealing layer (20) having barrier properties consist of a polymer alloy, preferably an alloy PP/PA, PE/PA, PP/ EVOH, PE/EVOH, PE/PMMA, PP/PMMA, PE/COC, PP/COC, PE/PET, PP/PET, EVA/PETG, EMA/PETG, EBA/PETG, PE/PS or PP/PS.

11. Multilayer packaging film according to one of claims 1 to 7, **characterised in that** the barrier layer (16) or the sealing layer (20) having barrier properties consists of a polymer containing nanoclays or other filling materials improving barrier properties.

12. Multilayer packaging film according to one of claims 1 to 11, **characterised in that** the sealing layer (18) consists of a polyolefin, preferably polyethylene (PE), polypropylene (PP) or derivatives or copolymers thereof, or mixtures of the aforementioned materials.

13. Multilayer packaging film according to one of claims 1 to 12, **characterised in that** the cover layer (12) is printed and or overlacquered with a cover lacquer.

14. Multilayer packaging film according to one of claim 1 to 13, **characterised in that** the multilayer packaging film is oriented using mono orientation technology, or one step or two steps, in line or off line, bi-orientation technology.

15. Multilayer packaging film according to one of the claim 1 to 13, **characterised in that** the bi-orientation technology is preferably a triple bubble coextrusion process.

16. Multilayer packaging film according to one of claims 1 to 15, **characterised in that** the cover layer (12) is connected to at least one other film (30A, 30B; 40A, 40B) consisting of a metal foil, preferably an aluminium foil, paper, plastic films or a combination of the aforementioned materials.

17. Use of a multilayer packaging film (10A, 10B) according to one of the aforementioned claims for the manufacture of packaging and parts of packaging such as lids, trays, containers, pouches, flow packs, blisters in the domains food and non-food, pharmaceutics, cosmetics as well as industrial applications.
